# EUROPEAN PATENT SPECIFICATION

(11) **EP 1 598 986 B1**
(45) Date of publication and mention of the grant of the patent: **11.07.2007**
(21) Application number: 05253021.9
(22) Date of filing: 17.05.2005
(51) Int. Cl.: H04L 12/46, H04L 12/28, H04L 12/64, H04L 29/12

(54) **Translation bridge between ethernet and 1394A local links for consumer electronics devices**
Brücke zur Übersetzung zwsichen lokalen Ethernet- und 1394A-Anschlüssen für Geräte der Unterhaltungselektronik
Pont de traduction entre des liaisons locales de type ethernet et 1394A pour des appareils électroniques de divertissement

(30) Priority: 18.05.2004 US 572081 P; 11.04.2005 US 103913
(43) Date of publication of application: 23.11.2005
(73) Proprietor: SAMSUNG ELECTRONICS CO., LTD., Suwon-si, Gyeonggi-do (KR)
(72) Inventor: Chaney, John William, Gilroy California 95020 (US)
(74) Representative: Robinson, Ian Michael

(56) References cited:
- EP-A- 1 058 422
- WO-A-02/09105
- US-A1- 2002 029 256
- US-A1- 2003 039 260
- US-A1- 2004 088 426
- CORCORAN P M: "MAPPING HOME-NETWORK APPLIANCES TO TCP/IP SOCKETS USING A THREE-TIERED HOME GATEWAY ARCHITECTURE" IEEE TRANSACTIONS ON CONSUMER ELECTRONICS, IEEE INC. NEW YORK, US, vol. 44, no. 3, August 1998 (1998-08), pages 729-736, XP000851577 ISSN: 0098-3063
- K. EGEVANG, P. FRANCIS: "RFC1631: The IP Network Address Translator" 31 May 1994 (1994-05-31), XP002246214
- SRISURESH P; EGEVANG K: "RFC 3022 - Traditional IP Network Translator" 31 January 2001 (2001-01-31), XP002227044

## Description

The present invention relates generally to interconnecting networks, and more particularly, to bridging Ethernet and 1394 Local Links.

To participate in wide-area IP networking, a host needs to be configured with IP addresses for its interfaces, either manually by the user or automatically from a source on the network such as a DHCP server. Unfortunately, such address configuration information may not always be available.

In general, the link-local address assignment for IPv4 generates an address that is not routable to other links. The IP devices on a 1394 link cannot be considered a logical part of an Ethernet link, and vice-versa, because the MAC address space is different and the maximum packet sizes are different. Link-Local IPv4 addresses are not suitable for communication with devices not directly connected to the same physical (or logical) link, and are only used where stable, routable addresses are not available (such as on ad hoc or isolated networks).

This problem remains unsolved for link-local IP addresses because link-local IP addresses are unroutable. Some conventional approaches require avoidance of link local address assignment with the addresses assigned from a routable pool by a DHCP server to all devices, where the address pools for each link are disjoint and all addresses assigned must be within the same subnet.

However, such conventional approaches do not allow link local address assignment to be used. The current Universal Plug and Play (UPnP) networking systems require link local address assignments under certain conditions. Further, such conventional approaches do not allow a set of devices, such as consumer electronic devices, on an IP over 1394 link to be mutually conversant with a set of IP conversant Ethernet devices on a adjacent local Ethernet link using an interconnect between the two local links.

EP-A-1,058,422 discloses a method for bridging a HAVi sub-network and a UPnP sub-network. The pre-charactering portion of the appended claims is based on this document.

WO-A-02/09105 discloses a method for connecting devices on a home network with another different network such as the Internet.

According to the present invention there is provided an apparatus and method as set forth in the appended claims. Preferred features of the invention will be apparent from the dependent claims, and the description which follows.

The present invention aims to address the above and other problems. In one embodiment, the present invention provides a method and system that allows a class of consumer electronic devices on an IP over 1394 local link to be mutually conversant with a class of IP conversant Ethernet devices on a adjacent local Ethernet link using an interconnect between the two local links. The present invention further allows IP/1394 devices to interoperate with UPnP devices.

According to an embodiment of the present invention, on each logical local link, a link local IP address is allocated for each other logical link to be bridged. The translation bridge then represents each external logical unit as that singular IP address concatenated with an assigned unique Port number which corresponds to the actual IP address and Port number of the external logical unit on its attached link.

Therefore, all of the devices on an external link appear as logical units in one physical device. That physical device then presents the union of all of the external logical units' 2027 file response as the local link 2027 file response for discovery. Then, physical packets are translated to the external devices as if emanating from the link local corresponding device. Further, addresses in hyperlinks are translated in exactly the same way, treating addresses and port numbers as the addresses.

Other embodiments, features and advantages of the present invention will be apparent from the following specification taken in conjunction with the following drawings.
Figure 1A shows a functional block diagram of a network implementing address translation according to an embodiment of the present invention;
Figure 1B shows a functional block diagram of another network implementing address translation according to an embodiment of the present invention;
Figure 2 shows a functional block diagram of another network implementing address translation according to an embodiment of the present invention;
Figure 3 shows a more detailed functional block diagram of the network of Figure 2; and
Figure 4 shows a functional block diagram of another network implementing address translation according to another embodiment of the present invention.

In one embodiment, the present invention provides a method and system for providing a translation bridge between Ethernet and 1394A local links for consumer electronics devices. The following description is in the context of CEA-2027 and CEA-931B compliant, IP controlled Graphical User Interfaces for the class of 1394 connected consumer electronics devices, and a similar set of Ethernet connected consumer electronics and information technology devices.

The primary concept in CEA-2027 is that of logical unit, which is addressed by an IP address and Port number, whether it be attached to Ethernet or 1394. According to an embodiment of the present invention, on each logical local link, a link local IP address is allocated for each other logical link to be bridged. The translation bridge then represents each external logical unit as that singular IP address concatenated with an assigned unique Port number which corresponds to the actual IP address and Port number of the external logical unit on its attached link.

Therefore, all of the devices on an external link appear as logical units in one physical device. That physical device then presents the union of all of the external logical units' 2027 file response as the local link 2027 file response for discovery. Then, physical packets are translated to the external devices as if emanating from the link local corresponding device. Further, addresses in hyperlinks are translated in exactly the same way, treating addresses and port numbers as the addresses.

In the example herein, Link-Local addressing, for IPv4 communication between two hosts on a single link is described. A set of hosts is considered to be on the same link, if: when any host A from that set sends a packet to any other host B in that set, using unicast, multicast, or broadcast, the entire link-layer packet payload arrives unmodified, and a broadcast sent over that link by any host from that set of hosts can be received by every other host in that set.

In this example, a host automatically configures an interface with an IPv4 address within a 169.254/16 prefix that is valid for communication with other devices connected to the same physical (or logical) link.

As noted, to interoperate between 2027 devices on a local IP/Ethernet link and a local IP/1394 link, a conventional bridge or a router cannot be used. A 2027 device is defined by its 2027 file. The 2027 file is the union of its logical block descriptions. According to the present invention, a transitional bridge or representational device (RD) is provided in each network, that represents all logical units on one link as a single physical device on the other link.

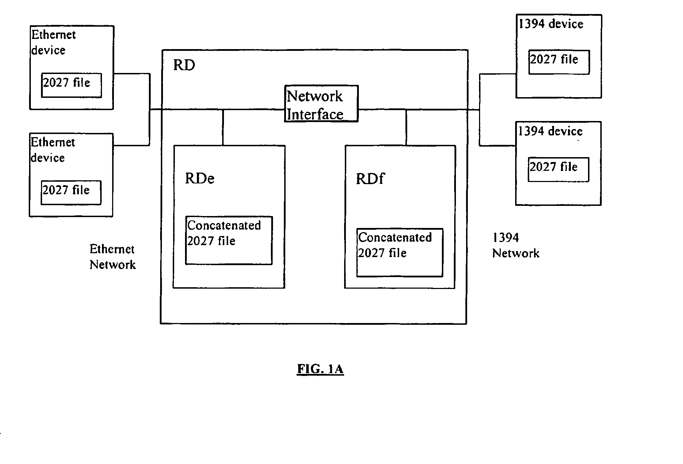

As shown by the example functional block diagram in Figure 1A, according to an embodiment of the present invention, a transitional bridge or representational device (RD) comprises: in the Ethernet network, an RDe transitional bridge device, and in the 1394 network, an RDf transitional bridge device. The RD further comprises a network interface between the 1394 and Ethernet network.

In this configuration, on each logical local link, a link local IP address is allocated for each other logical link to be bridged. The translation bridge RD then represents each external logical unit as that singular IP address concatenated with an assigned unique Port number which corresponds to the actual IP address and Port number of the external logical unit on its attached link.

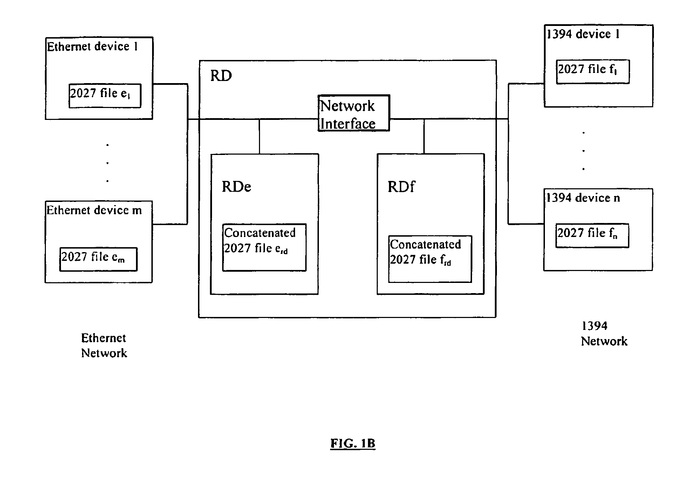

In another example functional block diagram in Figure 1B, according to another embodiment of the present invention, a transitional bridge or representational device (RD) comprises: for the Ethernet network, an RDe transitional bridge device, and multiple Ethernet devices (1, ..., m), the Ethernet devices including corresponding 2027 files (e₁, ..., eₘ) .

In the example of Figure 1B, because the RDe represents all the firewire devices to the Ethernet local link, then the concatenated 2027 file corresponding to the RDe is the remapped version of the union of the firewire 2027 files: f₁, ..., fₙ. Likewise, as the RDf represents the Ethernet devices to the 1394 devices, the 2027 file correspding to the RDf is the remapped version of the union of the Ethernet 2027 files: e₁, ..., eₘ.

The RD devices further comprises: for the 1394 network, an RDf transitional bridge device, and multiple 1394 devices (1, ..., n), the 1394 devices including corresponding 2027 files (f₁, ..., fₙ) . The RD further comprises a network interface between the 1394 and Ethernet network.

The RDe device includes a 2027 file f_{rd} which is the union of Ethernet devices' 2027 files e₁, ..., eₘ. Further, the RDf device includes a 2027 file e_{rd} which is the union of the 1394 devices' 2027 files f₁, ..., fₙ. The RDf's 2027 file, f_{rd}, is then processed to remap Universal Resource Identifier (URI) values. The RDe's 2027 file, e_{rd}, then processed to remap URI values.

Because the RDf represents the devices which are physically and directly connected on the Ethernet network to the devices which are physically and directly connected on the 1394 network, and the RDe vice versa, then the methods used for the RDf apply precisely to the RDe.

On each logical local link, a link local IP address is allocated for each other logical link to be bridged. The translation bridge RD then represents each external logical unit as that singular IP address concatenated with an assigned unique Port number which corresponds to the actual IP address and Port number of the external logical unit on its attached link.

As such, the RDf is configured such that:
1. The RDf at its Ethernet port receives a link local IP address via link local address assignment (LLAA) on the Ethernet network.
2. The RDf collects the results of 2027 discovery on the Ethernet network and the 2027 files of all other such devices on the Ethernet network, exclusive of those presented by the RDe.
3. The RDf determines a remap table Tf for logical units' (e.g., IP address, port number, Prefix) to present those devices to the 1394 connected devices.
4. The RDf creates its 2027 file f_{rd} as the union of the 2027 files (e₁, ..., eₘ) from those devices connected directly to the Ethernet network, but with the IP address, port number and Prefix, remapped per the table Tf.
5. Once the 2027 file f_{rd} is formed, the RDf may trigger a reset on the 1394 bus and participate in 2027 discovery on the 1394 network local link.
6. When a 1394 device, e.g. device A, issues an HTTP get of an object from the RDf, then the map Tf is utilized and the RDf makes the corresponding HTTP GET from the corresponding directly connected Ethernet device. This received object and response are used by the RDf to fulfill the original HTTP GET from the device A. Any hyperlinks present in the received object are mapped using the table Tf before sending the result to the device A.

This process is particularly valuable for IPv4 link local addressed devices. IPv6 solves some of these problems in that all IPv6 addresses are routable.

Further, the RDe is configured such that:
1. The RDe at its 1394 port receives a link local IP address via link local address assignment (LLAA) on the 1293 network.
2. The RD3 collects the results of 2027 discovery on the 1394 network and the 2027 files of all other such devices on the 1394 network, exclusive of those presented by the RDf.
3. The RDe determines a remap table Te for logical units' (e.g., IP address, port number, Prefix) to present those devices to the Ethernet connected devices.
4. The RDe creates its 2027 file e_{rd} as the union of the 2027 files (f₁, ..., fₙ) from those devices connected directly to the 1394 network, but with the IP address, port number and Prefix, remapped per the table Te.
5. Once the 2027 file e_{rd} is formed, the RDe may trigger a reset on the Ethernet network and participate in 2027 discovery on the Ethernet network local link.
6. When an Ethernet device, e.g. device B, issues an HTTP get of an object from the RDe, then the Te map is utilized and the RDe makes the corresponding HTTP GET from the corresponding directly connected 1394 device. This received object and response are used by the RDe to fulfill the original HTTP GET from the device B. Any hyperlinks present in the received object are mapped using the table in Te before sending the result to the device B.

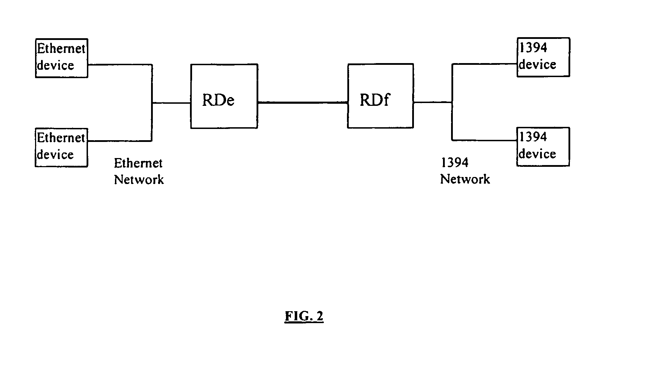

Figure 2 shows a functional block diagram, according to another embodiment of the present invention, wherein in the Ethernet network an RDe transitional bridge device is provided, and in the 1394 network an RDf transitional bridge device is provided. In this configuration, on each logical local link, a link local IP address is allocated for each other logical link to be bridged. The translation bridge then represents each external logical unit as that singular IP address concatenated with an assigned unique Port number which corresponds to the actual IP address and Port number of the external logical unit on its attached link.

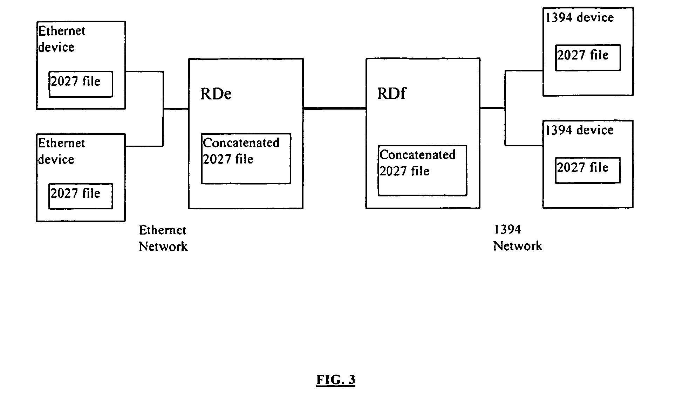

Referring to the more detailed block diagram in Figure 3, the Ethernet side RDe device includes a 2027 file that represents the entire logical local link of 2027 devices in the 1394 network. The 2027 file for the Ethernet side RDe device comprises a concatenation of all of the separate 2027 files for the 1394 (firewire) devices.

The RDe device in the Ethernet network represents all of the 1394 devices to the 2027compliant devices in the Ethernet network. All of the devices on an external link appear as logical units in one physical RDe device. That RDe physical device then presents the union of all of the external logical units' 2027 file response as the local link 2027 file response for discovery.

Then, physical packets are translated to the external devices as if emanating from the link local corresponding device. This process refers to either translation or direction (the process is reflexive). As such, the corresponding device can be the other type of device from what is being represented (e.g., the corresponding device can be either a 1394 or an Ethernet device).

Further, addresses in hyperlinks are translated in exactly the same way, treating addresses and port numbers as the addresses. Port numbers are remapped to make unique assignment for the RDe device wherein the RDe device is a legitimate 2027 compliant Ethernet device in the Ethernet network.

The 1394 side RDf device includes a 2027 file that represents the entire logical local link of 2027 devices in the Ethernet network. The 2027 file for the RDf device is the concatenation of the 2027 files from all of the Ethernet devices, except the RDe device.

The RDf firewire 2027 compliant device in the 1394 network represents all of the 2027 Ethernet devices to the 2027 compliant devices in the 1394 network. All of the devices on an external link appear as logical units in one physical RDf device. That RDf physical device then presents the union of all of the external logical units' 2027 file response as the local link 2027 file response for discovery.

Then, physical packets are translated to the external devices as if emanating from the link local corresponding device. Further, addresses in hyperlinks are translated in exactly the same way, treating addresses and port numbers as the addresses. Again, port numbers are remapped to make a unique assignment for the RDf device.

Accordingly, HTTP GET commands from a 1394 device on the 1394 network to the RDf device are reflected to the proper Ethernet logical unit in the Ethernet network using a port number remap. The returned content from that proper Ethernet logical unit comprises XHTML content, wherein the hyperlinks contained in the content are also port number remapped. Hyperlinks that are native to an Ethernet device are port mapped within the RDf so that RDf has a unique representation of it on 1394 at the RD_{f} interface. Likewise, the hyperlinks that are physically resident on the 1394 local link are port mapped within the RDₑ to have a unique representation on the Ethernet local link.

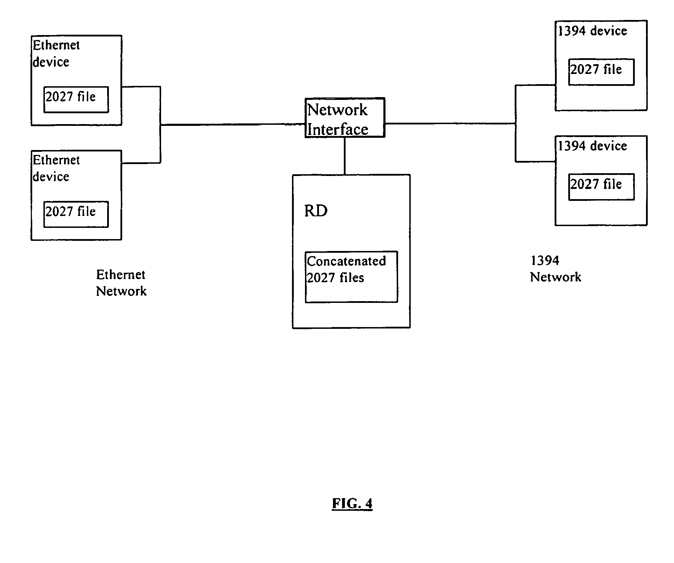

As such, when the hyperlinks are activated in a 1394 result from a GET generated to the RDf device, the activations are reflected to the proper Ethernet logical units in the Ethernet network. In another embodiment of the present invention shown in Figure 4, one RD device is utilized, which is a combination of the functionality of the RDe and RDf devices described above.

While this invention is susceptible of embodiments in many different forms, there are shown in the drawings and will herein be described in detail, preferred embodiments of the invention with the understanding that the present disclosure is to be considered as an exemplification of the principles of the invention and is not intended to limit the broad aspects of the invention to the embodiments illustrated. For example, other types of networks in place of Ethernet and 1394 networks maybe utilized.

The aforementioned example architectures above according to the present invention, can be implemented in many ways, such as program instructions for execution by a processor, as logic circuits, as ASIC, as firmware, etc., as is known to those skilled in the art. Therefore, the present invention is not limited to the example embodiments described herein.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing address translation between a first network (f) and an external network (e), the method **characterised by** the steps of:
in a translation device (RD):
allocating a link-local IP address on a first IP local link of the first network for each external logical device in the external network (e), where the first network includes logical devices (f₁-fₙ) on the first IP local link and the external network includes the external logical devices (e₁-eₘ) on another second IP local link, and wherein the logical devices (f₁-fₙ) in the first network (f) are CEA-2027 type devices, and the external logical devices (e₁-eₘ) in the external network (e) are also 2027 type devices, and wherein each of the external logical devices (e₁-eₘ) includes a CEA-2027 file including local address information;
determining a remap table (Tf) which maps the external logical devices (e₁-eₘ) to the allocated link-local IP addresses in the first IP local link;
combining the CEA-2027 device information files of the external logical devices (e₁-eₘ) into a combined CEA-2027 file in the translation device (RD) wherein the combined CEA-2027 file is remapped according to the remap table (Tf) to provide address translation; and
representing to the logical devices in the first network (f), each of the external logical devices (e₁-eₘ) at the corresponding allocated link-local addresses, such that the translation device (RD) presents to the logical devices (f₁-fₙ) in the first network (f) a union of the external logical devices (e₁-eₘ) .

2. The method of claim 1, wherein the step of allocating the link-local address for each external logical device (e₁-eₘ) further comprises the steps of including in each link-local address a unique port number corresponding to an actual address and port number of the corresponding external logical device (e₁-eₘ) in the external network (e).

3. The method of claim 1, further including the step of translating physical packets to the external logical devices (e₁-eₘ) as though emanating from a link-local corresponding device (RDe) within the translation device (RD) and in the external network (e).

4. The method of claim 2, further including the step of translating physical packets to the external logical devices (e₁-eₘ) as though emanating from a link-local corresponding device (RDe) within the translation device (RD) and in the external network (e), by translating from the allocated link-local addresses including the unique port numbers to the actual addresses and port numbers of the external logical devices (e₁-eₘ).

5. The method of claim 3, further including the steps of translating addresses in content, to the external logical devices (e₁-eₘ) as though emanating from the link-local corresponding device (RDe).

6. The method of claim 4, further including the steps of translating addresses in content, to the external logical devices (e₁-eₘ), as though emanating from the link-local corresponding device (RDe), with respect to the addresses and port numbers.

7. The method of any preceding claim, wherein the first network (f) comprises an IP over 1394 network and the external network (e) comprises an IP over Ethernet network.

8. The method of any preceding claim, further including the steps of:
in the translation device (RD):
allocating a link-local address in the second IP local link of the external network for each of the logical devices (f₁-fₙ) in the first network (f);
determining a remap table (Te) which maps the logical devices (f₁-fₙ) in the first network to the allocated IP addresses in the second IP local link ;
combining CEA-2027 device information files of the logical devices (f₁-fₘ) in the first network (f) into a combined CEA-2027 file in the translation device (RD) wherein the combined CEA-2027 file is remapped according to the remap table (Te) to provide address translation; and
representing to the external logical devices (e₁-eₘ) in the external network (e), each of the logical devices (f₁-fₙ) in the first network (f) at the corresponding allocated link-local addresses, such that the translation device (RD) presents to the external logical devices (e₁-eₘ) in the external network (e) a union of the logical devices (f₁-fₙ) in the first network (f).

9. The method of claim 8, wherein the step of allocating a link-local address for each logical device (f₁-fₙ) in the first network (f) further comprises the step of including in each link-local address a unique port number corresponding to the actual address and port number of the corresponding logical device (f₁-fₙ) in the first network (f).

10. The method of claim 8, further including the step of translating physical packets to the logical devices (f₁-fₙ) in the first network (f) as though emanating from a second link-local corresponding device (RDf) of the translation device (RD) in the first network (f).

11. The method of claim 9, further including the step of translating physical packets to the logical devices (f₁-fₙ) in the first network (f) as though emanating from a second link-local corresponding device (RDf) of the translation device (RD) in the first network (f), with respect to the addresses and port numbers.

12. The method of claim 10, further including the step of translating addresses in content, to the devices in the first network (f), as though emanating from the second link-local corresponding device (RDf).

13. The method of claim 11, further including the step of translating addresses in content, to the devices in the first network (f), as though emanating from the second link-local corresponding device (RDf), with respect to the addresses and port numbers.

14. A controller adapted to provide address translation between a first network (f) and an external network (e), **characterised in that** the controller comprises:
a translation device (RD) adapted to allocate a link-local IP address on a first IP local link of the first network for each external logical device (e₁-eₘ) in the external network (e), where the first network includes logical devices (f₁-fₙ) on the first IP local link and the external network includes the external logical devices (e₁-eₘ) on another second IP local link, and wherein the logical devices (f₁-fₙ) in the first network (f) are 2027 type devices, and the external logical devices (e₁-eₘ) in the external network (e) are also CEA-2027 type devices, and wherein each of the external logical devices (e₁-eₘ) includes a CEA-2027 file including local address information, the translation device adapted to determine a remap table (Tf): which maps the external logical devices (e₁-eₘ) to the allocated link-local IP addresses in the first IP local link; and adapted to combine the CEA-2027 device information files of the external logical devices (e₁-eₘ) into a combined CEA-2027 file in the translation device (RD) wherein the combined 2027 file is remapped according to the remap table (Tf) to provide address translation and adapted to represent to the logical devices (f₁-fₙ) in the first network (f), each of the external logical devices (e₁-eₘ) at the corresponding allocated link-local addresses, such that the translation device (RD) presents to the devices in the first network (f) a union of the external logical devices (e₁-eₘ).

15. The controller of claim 14, wherein the translation device (RD) allocates a link-local address for each external logical device (e₁-eₘ) by allocating a unique port number corresponding to an actual address and port number of the corresponding external logical device (e₁-eₘ) in the external network (e).

16. The controller of claim 14, wherein the controller further translates physical packets to the external logical devices (e₁-eₘ) as though emanating from a link-local corresponding device (RDe) which is on the external network (e).

17. The controller of claim 15, wherein the controller further translates physical packets to the external logical devices (e₁-eₘ) as though emanating from a link-local corresponding device (RDe) which is on the external network (e), with respect to addresses and port numbers.

18. The controller of claim 16, wherein the controller further translates addresses in content, to the external logical devices (e₁-eₘ), as though emanating from the link-local corresponding device (RDe).

19. The controller of claim 17, wherein the controller further translates addresses in content, to the external logical devices (e₁-eₘ), as though emanating from the link-local corresponding device (RDe), by treating addresses and port numbers as the addresses.

20. The controller of any of claims 14 to 19, wherein the first network (f) comprises an IP/1394 network and the external network (e) comprises an IP/Ethernet network.

## Patentansprüche

1. Verfahren zum Bereitstellen von Adressenumsetzung zwischen einem ersten Netzwerk (f) und einem externen Netzwerk (e), wobei das Verfahren durch die folgenden Schritte **gekennzeichnet** ist:
in einer Umsetzvorrichtung (RD):
Zuweisen einer ersten verbindungslokalen (link-local) IP-Adresse auf einer ersten lokalen IP-Verbindung des ersten Netzwerks für jede externe logische Vorrichtung in dem externen Netzwerk (e), wobei das erste Netzwerk logische Vorrichtungen (f₁-fₙ) auf der ersten lokalen IP-Verbindung enthält, das externe Netzwerk die externen logischen Vorrichtungen (e₁-eₘ) auf einer anderen zweiten lokalen IP-Verbindung enthält, die logischen Vorrichtungen (f₁-fₙ) in dem ersten Netzwerk (f) Vorrichtungen vom Typ CEA2027 sind, die externen logischen Vorrichtungen (e₁-eₘ) in dem externen Netzwerk (e) ebenfalls Vorrichtungen vom Typ 2027 sind und jede der externen logischen Vorrichtung (e₁-eₘ) eine CEA-2027-Datei enthält, die lokale Adressinformationen enthält;
Bestimmen einer Neu-Zuordnungstabelle (remap table) (tf), die die externen logischen Vorrichtung (e₁-eₘ) den zugewiesenen verbindungslokalen IP-Adressen in der ersten lokalen IP-Verbindung zuordnet;
Kombinieren der Dateien mit Informationen der CEA-2027-Vorrichtungen der externen logischen Vorrichtungen (e₁-eₘ) zu einer kombinierten CEA-2027-Datei in der Umsetzvorrichtung (RD), wobei die kombinierte CEA-2027-Datei entsprechend der Neuzuordnungstabelle (Tf) neu zugeordnet wird, um Adressumsetzung bereitzustellen; und
Darstellen jeder der externen logischen Vorrichtungen (e₁-eₘ) an den entsprechenden zugewiesenen verbindungslokalen Adressen für die logischen Vorrichtungen in dem ersten Netzwerk (f) so, dass die Umsetzvorrichtung (RD) für die logischen Vorrichtungen (f₁-fₙ) in dem ersten Netzwerk (f) eine Einheit der externen logischen Vorrichtungen (e₁-eₘ) darstellt.

2. Verfahren nach Anspruch 1, wobei der Schritt des Zuweisens der verbindungslokalen Adresse für jede externe logische Vorrichtung (e₁-eₘ) des Weiteren den Schritt des Integrierens einer eindeutigen Port-Nummer, die einer tatsächlichen Adresse entspricht, und einer Port-Nummer der entsprechenden externen logischen Vorrichtung (e₁-eₘ) in dem externen Netzwerk (e) in jede verbindungslokale Adresse umfasst.

3. Verfahren nach Anspruch 1, das des Weiteren den Schritt einschließt, in dem physikalische Pakete zu den externen logischen Vorrichtungen (e₁-eₘ) so umgesetzt werden, als ob sie von einer entsprechenden verbindungslokalen Vorrichtung (RDe) in der Umsetzvorrichtung (RD) und in dem externen Netzwerk (e) ausgingen.

4. Verfahren nach Anspruch 2, das des Weiteren den Schritt einschließt, in dem physikalische Pakete zu den externen logischen Vorrichtungen (e₁-eₘ) so umgesetzt werden, als ob sie von einer entsprechenden verbindungslokalen Vorrichtung (RDe) in der Umsetzvorrichtung (RD) und in dem externen Netzwerk (e) ausgingen, indem von den zugewiesenen verbindungslokalen Adressen, die die eindeutigen Port-Nummer enthalten, zu den tatsächlichen Adressen und Port-Nummern der externen logischen Vorrichtungen (e₁-eₘ) umgesetzt wird.

5. Verfahren nach Anspruch 3, das des Weiteren den Schritt einschließt, in dem Adressen in Inhalt zu den externen logischen Vorrichtungen (e₁-eₘ) so umgesetzt werden, als ob sie von der entsprechenden verbindungslokalen Vorrichtung (RDe) ausgingen.

6. Verfahren nach Anspruch 4, das des Weiteren den Schritt einschließt, in dem Adressen in Inhalt zu den externen logischen Vorrichtungen (e₁-eₘ) in Bezug auf die Adressen und Port-Nummern so umgesetzt werden, als ob sie von der entsprechenden verbindungslokalen Vorrichtung (RDe) ausgingen.

7. Verfahren nach einem der vorangehenden Ansprüche, wobei das erste Netzwerk (f) ein IP-Over-1394-Netzwerk umfasst und das externe Netzwerk (e) ein IP-Over-Ethernet-Netzwerk umfasst.

8. Verfahren nach einem der vorangehenden Ansprüche, das des Weiteren die folgenden Schritte einschließt:
in der Umsetzvorrichtung (RD):
Zuweisen einer verbindungslokalen Adresse in der zweiten lokalen IP-Verbindung des externen Netzwerks für jede der logischen Vorrichtungen (f₁-fₙ) in dem ersten Netzwerk (f);
Bestimmen einer Neuzuordnungstabelle (te), die die logischen Vorrichtungen (f₁-fₙ) in dem ersten Netzwerk den zugewiesenen IP-Adressen in der zweiten lokalen IP-Verbindung zuordnet;
Kombinieren von Dateien mit Informationen der CEA-2027-Vorrichtungen der logischen Vorrichtungen (f₁-fₙ) in dem ersten Netzwerk (f) zu einer kombinierten CEA-2027-Datei in der Umsetzvorrichtung (RD), wobei die kombinierte CEA-2027-Datei entsprechend der Neuzuordnungstabelle (Te) neu zugeordnet wird, um Adressumsetzung bereitzustellen; und
Darstellen jeder der logischen Vorrichtungen (f₁-fₙ) in dem ersten Netzwerk (f) an den entsprechenden zugewiesenen verbindungslokalen Adressen für die externen logischen Vorrichtungen (e₁-eₘ) in dem externen Netzwerk (e) so, dass die Umsetzvorrichtung (RD) für die externen logischen Vorrichtungen (e₁-eₘ) in dem externen Netzwerk (e) eine Einheit der logischen Vorrichtungen (f₁-fₙ) in dem ersten Netzwerk (f) darstellt.

9. Vorrichtung nach Anspruch 8, wobei der Schritt des Zuweisens einer verbindungslokalen Adresse für jede logische Vorrichtung (f₁-fₙ) in dem ersten Netzwerk (f) des Weiteren den Schritt des Integrierens einer eindeutigen Port-Nummer, die der tatsächlichen Adresse entspricht, und einer Port-Nummer der entsprechenden logischen Vorrichtung (f₁-fₙ) in dem ersten Netzwerk (f) in jede verbindungslokale Adresse umfasst.

10. Verfahren nach Anspruch 8, das des Weiteren den Schritt einschließt, in dem physikalische Pakete zu den logischen Vorrichtungen (f₁-fₙ) in dem ersten Netzwerk (f) so umgesetzt werden, als ob sie von einer zweiten entsprechenden verbindungslokalen Vorrichtung (RDf) der Umsetzvorrichtung (RD) in dem ersten Netzwerk (f) ausgingen.

11. Verfahren nach Anspruch 9, das des Weiteren den Schritt einschließt, in dem physikalische Pakete zu den logischen Vorrichtungen (f₁-fₙ) in dem ersten Netzwerk (f) bezüglich der Adressen und Port-Nummern so umgesetzt werden, als ob sie von einer zweiten entsprechenden verbindungslokalen Vorrichtung (RDf) der Umsetzvorrichtung (RD) in dem ersten Netzwerk (f) ausgingen.

12. Verfahren nach Anspruch 10, das des Weiteren den Schritt einschließt, in dem Adressen in Inhalt zu den Vorrichtungen in dem ersten Netzwerk (f) so umgesetzt werden, als ob sie von der zweiten entsprechenden verbindungslokalen Vorrichtung (RDf) ausgingen.

13. Verfahren nach Anspruch 11, das des Weiteren den Schritt einschließt, in den Adressen in Inhalt in Bezug auf die Adressen und Port-Nummern zu den Vorrichtungen in dem ersten Netzwerk (f) so umgesetzt werden, als ob sie von der zweiten entsprechenden verbindungslokalen Vorrichtung (RDf) ausgingen.

14. Steuereinheit, die so eingerichtet ist, dass sie Adressumsetzung zwischen einem ersten Netzwerk (f) und einem externen Netzwerk (e) bereitstellt, **dadurch gekennzeichnet, dass** die Steuereinheit umfasst:
eine Umsetzvorrichtung (RD), die so eingerichtet ist, dass sie eine verbindungslokale IP-Adresse auf einer ersten lokalen IP-Verbindung des ersten Netzwerks für jede externe logische Vorrichtung (e₁-eₘ) in dem externen Netzwerk (e) zuweist, wobei das erste Netzwerk logische Vorrichtungen (f₁-fₙ) auf der ersten lokalen IP-Verbindung enthält, das externe Netzwerk die externen logischen Vorrichtungen (e₁-eₘ) auf einer anderen zweiten lokalen IP-Verbindung enthält, die logischen Vorrichtungen (f₁-fₙ) in dem ersten Netzwerk (f) Vorrichtungen vom Typ 2027 sind, die externen logischen Vorrichtungen (e₁-eₘ) in dem externen Netzwerk (e) ebenfalls Vorrichtungen vom Typ CEA-2027 sind und jede der externen logischen Vorrichtungen (e₁-eₘ) ein CEA-2027-Datei enthält, die lokale Adressinformationen enthält, die Umsetzvorrichtung so eingerichtet ist, dass sie eine Neuzuordnungstabelle (Tf) bestimmt, die die externen logischen Vorrichtungen (e₁-eₘ) den zugewiesenen verbindungslokalen IP-Adressen in der ersten lokalen IP-Verbindung zuordnet; und so eingerichtet ist, dass sie die Dateien mit Informationen der CEA-2027-Vorrichtungen der externen logischen Vorrichtungen (e₁-eₘ) zu einer kombinierten CEA-2027-Datei in der Umsetzvorrichtung (RD) kombiniert, wobei die kombinierte 2027-Datei entsprechend der Neuzuordnungstabelle (Tf) neu zugeordnet wird, um Adressumsetzung bereitzustellen, und so eingerichtet ist, dass sie jede der externen logischen Vorrichtungen (e₁-eₘ) an den entsprechenden zugewiesenen verbindungslokalen Adressen für die logischen Vorrichtungen (f₁-fₙ) in dem ersten Netzwerk (f) so darstellt, dass die Umsetzvorrichtung (RD) für die Vorrichtungen in dem ersten Netzwerk (f) eine Einheit der externen logischen Vorrichtungen (e₁-eₘ) darstellt.

15. Steuereinheit nach Anspruch 14, wobei die Umsetzvorrichtung (RD) eine verbindungslokale Adresse für jede externe logische Vorrichtung (e₁-eₘ) zuweist, indem sie eine eindeutige Port-Nummer, die einer tatsächlichen Adresse entspricht, und eine Port-Nummer der entsprechenden externen logischen Vorrichtung (e₁-eₘ) in dem externen Netzwerk (e) zuweist.

16. Steuereinheit nach Anspruch 14, wobei die Steuereinheit des Weiteren physikalische Pakete zu den externen logischen Vorrichtungen (e₁-eₘ) so zuweist, als ob sie von einer entsprechenden verbindungslokalen Vorrichtung (RDe) ausgingen, die sich in dem externen Netzwerk (e) befindet.

17. Steuereinheit nach Anspruch 15, wobei die Steuereinheit des Weiteren physikalische Pakete zu den externen logischen Vorrichtungen (e₁-eₘ) in Bezug auf Adressen und Port-Nummern so umsetzt, als ob sie von einer entsprechenden verbindungslokalen Vorrichtung (RDe) ausgingen, die sich in dem externen Netzwerk (e) befindet.

18. Steuereinheit nach Anspruch 16, wobei die Steuereinheit des Weiteren Adressen in Inhalt zu den externen logischen Vorrichtungen (e₁-eₘ) so umsetzt, als ob sie von der entsprechenden verbindungslokalen Vorrichtung (RDe) ausgingen.

19. Vorrichtung nach Anspruch 17, wobei die Steuereinheit des Weiteren Adressen in Inhalt zu den externen logischen Vorrichtungen (e₁-eₘ) so umsetzt, als ob sie von der entsprechenden verbindungslokalen Vorrichtung (RDe) ausgingen, indem sie Adressen und Port-Nummern als die Adressen behandelt.

20. Steuereinheit nach einem der Ansprüche 14 bis 19, wobei das erste Netzwerk (f) ein IP/1394-Netzwerk umfasst und das externe Netzwerk (e) ein IP/Ethernet-Netzwerk umfasst.

## Revendications

1. Procédé pour fournir une traduction d'adresses entre un premier réseau (f) et un réseau externe (e), le procédé étant **caractérisé par** les étapes consistant à :
dans un dispositif de traduction (RD) :
allouer une adresse IP de liaison locale sur une première liaison locale IP du premier réseau pour chaque dispositif logique externe dans le réseau externe (e), où le premier réseau inclut des dispositifs logiques (f₁ à fₙ) sur la première liaison locale IP et le réseau externe inclut les dispositifs logiques externes (e₁ à eₘ) sur une autre seconde liaison locale IP, et dans lequel les dispositifs logiques (f₁ à fₙ) du premier réseau (f) sont des dispositifs de type CEA-2027, et les dispositifs logiques externes (e₁ à eₘ) du réseau externe (e) sont également des dispositifs de type CEA-2027, et dans lequel chacun des dispositifs logiques externes (e₁ à eₘ) inclut un fichier CEA-2027 incluant des informations d'adresses locales,
déterminer une table de réorganisation (Tf) qui organise les dispositifs logiques externes (e₁ à eₘ) en adresses IP de liaison locale allouées dans la première liaison locale,
combiner les fichiers d'informations de dispositif de type CEA-2027 des dispositifs logiques externes (e₁ à eₘ) dans un fichier CEA-2027 combiné dans le dispositif de traduction (RD) dans lequel le fichier CEA-2027 combiné est réorganisé conformément à la table de réorganisation (Tf) pour fournir une traduction d'adresses, et
présenter aux dispositifs logiques du premier réseau (f), chacun des dispositifs logiques externes (e₁ à eₘ) aux adresses de liaison locale allouées correspondantes, de sorte que le dispositif de traduction (RD) présente aux dispositifs logiques (f₁ à fₙ) du premier réseau (f) une union des dispositifs logiques externes (e₁ à eₘ).

2. Procédé selon la revendication 1, dans lequel l'étape d'allocation de l'adresse de liaison locale pour chaque dispositif logique externe (e₁ à eₘ) comporte de plus les étapes consistant à inclure dans chaque adresse de liaison locale un numéro de port unique correspondant à une adresse et un numéro de port réels du dispositif logique externe correspondant (e₁ à eₘ) dans le réseau externe (e).

3. Procédé selon la revendication 1, incluant de plus l'étape consistant à traduire des paquets physiques des dispositifs logiques externes (e₁ à eₘ) comme émanant d'un dispositif correspondant de liaison locale (RDe) dans le dispositif de traduction (RD) et dans le réseau externe (e).

4. Procédé selon la revendication 2, incluant de plus l'étape de traduction de paquets physiques aux dispositifs logiques externes (e₁ à eₘ) comme émanant d'un dispositif correspondant de liaison locale (RDe) dans le dispositif de traduction (RD) et dans le réseau externe (e), par une traduction à partir des adresses de liaison locale allouées incluant les numéros de ports uniques en adresses et numéros de port réels des dispositifs logiques externes (e₁ à eₘ).

5. Procédé selon la revendication 3, incluant de plus les étapes consistant à traduire des adresses en contenu, aux dispositifs logiques externes (e₁ à eₘ) comme émanant du dispositif correspondant de liaison locale (RDe).

6. Procédé selon la revendication 4, incluant de plus les étapes de traduction d'adresses en contenu, aux dispositifs logiques externes (e₁ à eₘ), comme émanant du dispositif correspondant de liaison locale (RDe), se rapportant aux adresses et numéros de port.

7. Procédé selon l'une quelconque des revendications précédentes, dans lequel le premier réseau (f) comporte un protocole IP sur un réseau 1394 et le réseau externe (e) comporte un protocole IP sur un réseau Ethernet.

8. Procédé selon l'une quelconque des revendications précédentes, comportant de plus les étapes consistant à :
dans le dispositif de traduction (RD) :
allouer une adresse de liaison locale dans la seconde liaison locale IP du réseau externe pour chacun des dispositifs logiques (f₁ à fₙ) dans le premier réseau (f),
déterminer une table de réorganisation (Te) qui organise les dispositifs logiques (f₁ à fₙ) du premier réseau en adresses IP allouées dans la seconde liaison locale IP,
combiner des fichiers d'informations de dispositif CEA-2027 des dispositifs logiques (f₁ à fₙ) dans le premier réseau (f) en un fichier CEA-2027 combiné dans le dispositif de traduction (RD) dans lequel le fichier CEA-2027 combiné est réorganisé conformément à la table de réorganisation (Te) pour fournir une traduction d'adresses, et
présenter aux dispositifs logiques externes (e₁ à eₘ) dans le réseau externe (e), chacun des dispositifs logiques (f₁ à fₙ) dans le premier réseau (f) aux adresses de liaison locale allouées correspondantes, de sorte que le dispositif de traduction (RD) présente aux dispositifs logiques externes (e₁ à eₘ) dans le réseau externe (e) une union des dispositifs logiques (f₁ à fₙ) dans le premier réseau (f).

9. Procédé selon la revendication 8, dans lequel l'étape d'allocation d'une adresse de liaison locale pour chaque dispositif logique (f₁ à fₙ) dans le premier réseau (f) comporte de plus l'étape consistant à inclure dans chaque adresse de liaison locale un numéro de port unique correspondant à l'adresse et numéro de port réels du dispositif logique correspondant (f₁ à fₙ) dans le premier réseau (f).

10. Procédé selon la revendication 8, incluant de plus l'étape consistant à traduire des paquets physiques aux dispositifs logiques (f₁ à fₙ) dans le premier réseau (f) come émanant d'un second dispositif correspondant de liaison locale (RDf) du dispositif de traduction (RD) dans le premier réseau (f).

11. Procédé selon la revendication 9, incluant de plus l'étape consistant à traduire des paquets physiques aux dispositifs logiques (f₁ à fₙ) dans le premier réseau (f) comme émanant d'un second dispositif correspondant de liaison locale (RDf) du dispositif de traduction (RD) dans le premier réseau (f), se rapportant aux adresses et numéros de port.

12. Procédé selon la revendication 10, incluant de plus l'étape de traduction d'adresses en contenu, aux dispositifs du premier réseau (f), comme émanant du second dispositif correspondant de liaison local (RDf).

13. Procédé selon la revendication 11, incluant de plus l'étape de traduction d'adresses en contenu, aux dispositifs du premier réseau (f), comme émanant du second dispositif correspondant de liaison locale (RDf), se rapportant aux adresses et numéros de port.

14. Contrôleur adapté pour fournir une traduction d'adresses entre un premier réseau (f) et un réseau externe (e), **caractérisé en ce que** le contrôleur comporte :
un dispositif de traduction (RD) adapté pour allouer une adresse IP de liaison locale sur une première liaison locale IP du premier réseau pour chaque dispositif logique externe (e₁ à eₘ) du réseau externe (e), où le premier réseau inclut des dispositifs logiques (f₁ à fₙ) sur la première liaison locale IP et le réseau externe inclut les dispositifs logiques externes (e₁ à eₘ) sur une autre seconde liaison locale IP, et dans lequel les dispositifs logiques (f₁ à fₙ) du premier réseau (f) sont des dispositifs de type 2027, et les dispositifs logiques externes (e₁ à eₘ) du réseau externe (e) sont également des dispositifs de type CEA-2027, et dans lequel chacun des dispositifs logiques externes (e₁ à eₘ) inclut un fichier CEA-2027 incluant des informations d'adresses locales, le dispositif de traduction étant adapté pour déterminer une table de réorganisation (Tf) qui organise les dispositifs logiques externes (e₁ à eₘ) en adresses IP de liaison locale allouées dans la première liaison locale IP, et adapté pour combiner les fichiers d'informations de dispositifs CEA-2027 des dispositifs logiques externes e₁ à eₘ) en un fichier CEA-2027 combiné dans le dispositif de traduction (RD), dans lequel le fichier CEA-2027 combiné est réorganisé conformément à la table de réorganisation (Tf), pour fournir une traduction d'adresses et adapté pour présenter aux dispositifs logiques (f₁ à fₙ) du premier réseau (f), chacun des dispositifs logiques externes (e₁ à eₘ) aux adresses de liaison locale allouées correspondantes, de sorte que le dispositif de traduction (RD) présente aux dispositifs du premier réseau (f) une union des dispositifs logiques externes (e₁ à eₘ).

15. Contrôleur selon la revendication 14, dans lequel le dispositif de traduction (RD) alloue une adresse de liaison locale pour chaque dispositif logique externe (e₁ à eₘ) en allouant un numéro de port unique correspondant à une adresse et un numéro de port réels du dispositif logique externe correspondant (e₁ à eₘ) dans le réseau externe (e).

16. Contrôleur selon la revendication 14, dans lequel le contrôleur traduit de plus des paquets physiques aux dispositifs logiques externes (e₁ à eₘ) comme émanant d'un dispositif correspondant de liaison locale (RDe) qui est sur le réseau externe (e).

17. Contrôleur selon la revendication 15, dans lequel le contrôleur traduit de plus des paquets physiques aux dispositifs logiques externes (e₁ à eₘ) comme émanant d'un dispositif correspondant de liaison locale (RDe) qui est sur le réseau externe (e), se rapportant à des adresses et numéros de port.

18. Contrôleur selon la revendication 16, dans lequel le contrôleur traduit de plus des adresses en contenu, aux dispositifs logiques externes (e₁ à eₘ), comme émanant du dispositif correspondant de liaison locale (RDe).

19. Contrôleur selon la revendication 17, dans lequel le contrôleur traduit de plus des adresses en contenu, aux dispositifs logiques externes (e₁ à eₘ), comme émanant du dispositif correspondant de liaison locale (RDe), en traitant des adresses et numéros de port en tant qu'adresses.

20. Contrôleur selon l'une quelconque des revendications 14 à 19, dans lequel le premier réseau (f) constitue un réseau IP/1394 et le réseau externe (e) constitue un réseau IP/Ethernet.
